# EUROPEAN PATENT SPECIFICATION

(11) **EP 2 119 881 B1**
(45) Date of publication and mention of the grant of the patent: **02.05.2012**
(21) Application number: 09250579.1
(22) Date of filing: 02.03.2009
(51) Int. Cl.: F01N 3/025, F01N 3/035

(54) **An exhaust device for a diesel engine**
Abgasvorrichtung für einen Dieselmotor
Dispositif d'échappement pour moteur diesel

(30) Priority: 15.05.2008 JP 2008128336
(43) Date of publication of application: 18.11.2009
(73) Proprietor: Kubota Corporation, Osaka-shi, Osaka (JP)
(72) Inventor: Nakahira, Toshio, Sakai-shi Osaka (JP)
(74) Representative: Horton, Andrew Robert Grant

(56) References cited:
- DE-A1-102005 030 954
- DE-A1-102005 039 630
- US-A- 4 372 111
- US-A- 4 449 362
- US-A1- 2006 021 332
- US-A1- 2006 096 282

## Description

The present invention concerns an exhaust device for a diesel engine and more specifically relates to an exhaust device for a diesel engine able to ensure the combustion of flammable gas and to inhibit the damage of an oxidation catalyst caused by heat.

An example of the conventional exhaust devices for a diesel engine comprises a liquid-fuel supply source which supplies liquid fuel to a gas generator, which converts the liquid fuel to flammable gas as well as the present invention. A flammable-gas pipe leading out of the gas generator communicates with an exhaust-gas route on an upstream side of a diesel-particulate-filter. An oxidation catalyst is arranged upstream of this filter in the exhaust-gas route and the flammable gas is burnt with the oxidation catalyst to produce combustion heat that heats the exhaust gas. The thus heated exhaust gas burns the exhaust-gas fine particles remaining at the filter.

However, in that known exhaust device for a diesel engine, the flammable gas is burnt only with the oxygen contained in the exhaust gas, and besides no igniting means is provided. Therefore, it causes problems. In particular, if the oxygen contained in the exhaust gas is insufficient, the flammable gas cannot be burnt. Moreover, owing to uneven concentration-distribution of the oxygen in the exhaust gas, a localised high-temperature combustion region may be produced in the oxidation-catalyst and may cause thermal damage to the oxidation catalyst. Furthermore, if the exhaust-gas temperature is rather low, the flammable gas mixed with the exhaust gas may not be burnt, especially as there is no means for igniting the flammable gas.

The present invention has an object to provide an exhaust device for a diesel engine capable of solving at least some of the above-mentioned problems; that is to say, able to promote the combustion of the flammable gas and to inhibit the heat-damaging of the oxidation catalyst.

The state of the art is reprented by DE 10 2005 039630 A1, with respect to which claim 1 is characterised.

The invention is most broadly defined in the independent claim 1.

### BRIEF DESCRIPTION OF THE DRAWINGS

Fig. 1(A) is a vertical section through an exhaust device for a diesel engine according to a first embodiment of the present invention.
Fig. 1(B) is a sectional view taken along a line B-B in Fig. 1(A); Fig. 1(C) is a sectional view taken along a line C-C in Fig. 1(A); and Fig. 1(D) is a sectional view taken along a line D-D in Fig. 1(A).
Fig. 2(A) is a schematic view of a diesel engine equipped with an exhaust device according to a second embodiment of the present invention.
Fig. 2(B) is a schematic view showing the arrangement of a downstream oxidation catalyst and a filter within a filter-housing case.
Fig. 3 (A) is a vertical section through an exhaust device for a diesel engine according to a second embodiment of the present invention.
Fig. 3(B) is a sectional view taken along a line B-B in Fig. 3(A); Fig. 3(C) is a sectional view taken along a line C-C in Fig. 3(A); and Fig. 3(D) is a sectional view taken along a line D-D in Fig. 3(A)

### GENERAL DESCRIPTION

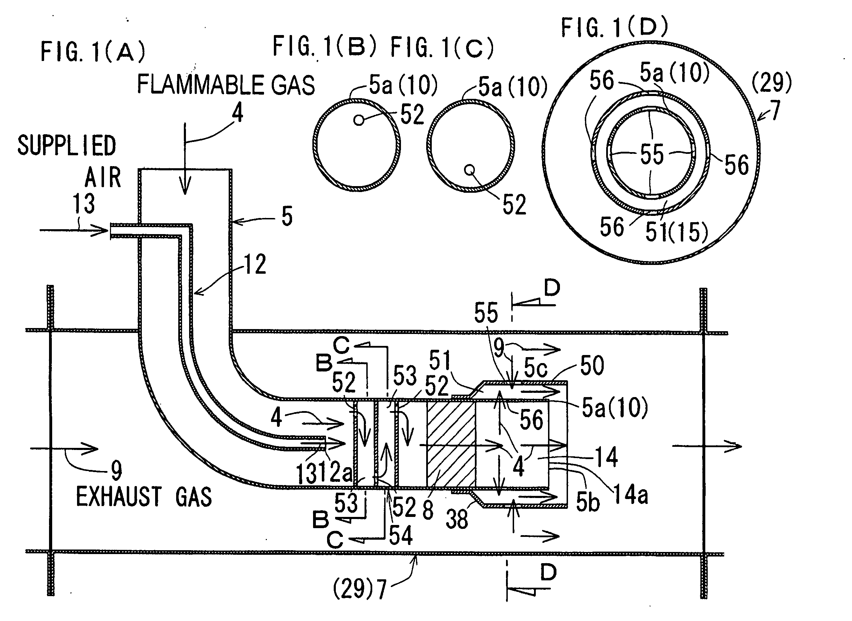

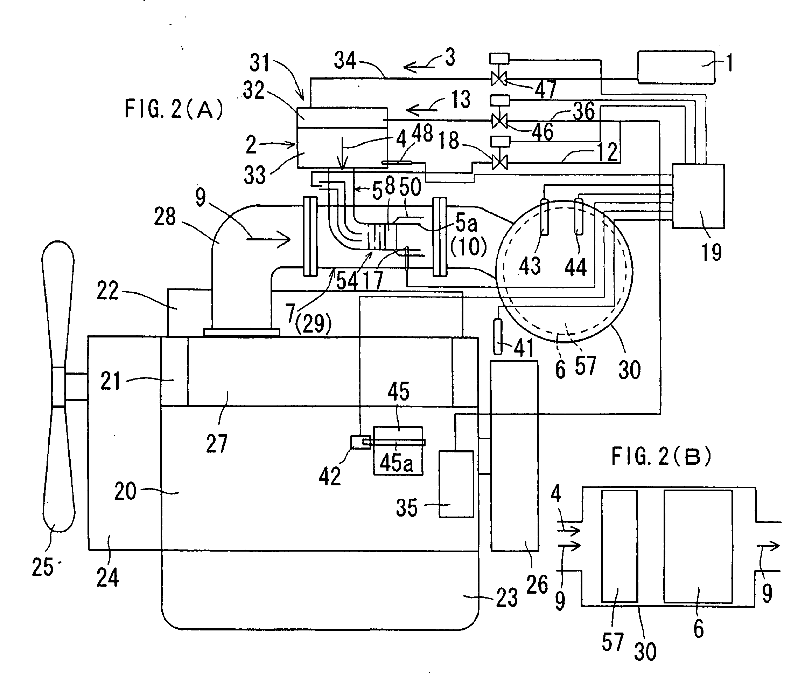

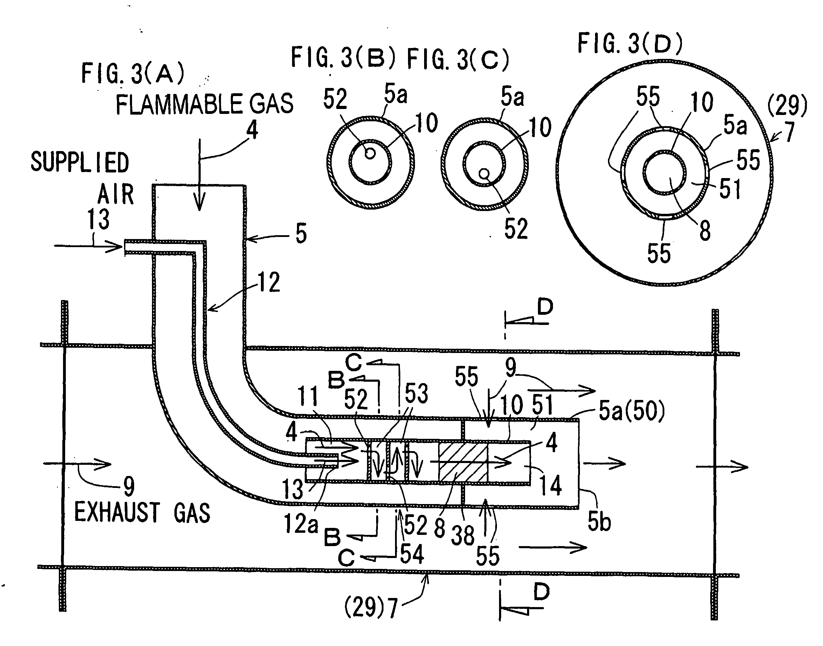

As exemplified in Fig. 2, an exhaust device for a diesel engine comprises a liquid-fuel supply source 1 that supplies liquid fuel 3 to a gas generator 2 which converts the liquid fuel 3 to flammable gas 4. A flammable-gas pipe 5 leads out of the gas generator 2 and is in communication with an exhaust-gas route 7 upstream of a diesel-particulate-filter 6, on an upstream side of which oxidation catalysts 8, 57 are disposed in the exhaust-gas route 7. The flammable gas 4 is burnt with the oxidation catalysts 8, 57 to produce combustion heat that heats exhaust gas 9. The thus heated exhaust gas 9 can burn the exhaust-gas' fine particles clogging the filter 6.
In the exhaust device exemplified in Fig. 1(A) or Fig. 3(A), the flammable-gas lead-out pipe 5 has a terminal end portion 5a arranged in the exhaust-gas route 7 and a metal cylinder 10 is disposed at the terminal end portion 5a of the flammable-gas lead-out pipe 5 and the oxidation catalyst 8 is arranged within the metal cylinder 10. On an upstream side of the oxidation catalyst 8, an air-supply passage 12 is opened to provide an outlet 12a and the flammable gas 4 merges with supplied air 13. The flammable gas 4 is burnt with the oxidation catalyst 8 to produce combustion heat, which is radiated from an outer peripheral surface of the metal cylinder 10 into the exhaust gas 9 in the exhaust-gas route 7 and the exhaust gas 9 heated by this heat-radiation is mixed with the flammable gas 4 that has passed through the oxidation catalyst 8.

As illustrated in Fig. 1(A) or Fig. 3 (A) for example only, on an upstream side of the oxidation catalyst 8 the air-supply passage 12 is opened to provide the outlet 12a and the flammable gas 4 merges with the supplied air 13. This promotes the combustion of the flammable gas 4 even if only a small amount of oxygen is present in the exhaust pas 9.

Owing to the fact that the concentration-distribution of the oxygen is uniform in the supplied air 13, a localised high-temperature combustion region hardly occurs in the oxidation catalyst 8 and accordingly consequential thermal damage due to that cause can be avoided.

As shown in Fig. 1(A) or Fig. 3(A), the flammable gas 4 is burnt with the oxidation catalyst 8 to produce combustion heat, which is radiated from the outer peripheral surface of the metal cylinder 10 into the exhaust gas 9 in the exhaust-gas route 7. The exhaust gas 9 heated by this heat-radiation is mixed with the flammable gas 4 that has passed through the oxidation catalyst 8. This enhances the temperature of the exhaust gas 9 and promotes the combustion of the flammable gas 4 mixed with the exhaust gas 9 even if the exhaust gas 9 has initially a low temperature.

As exemplified in Fig. 1(A) or Fig. 3(A), each of the terminal end portion 5a of the flammable-gas lead-out pipe 5 and the metal cylinder 10 has an axial direction extending along the direction of the exhaust-gas route 7. This avoids an unnecessary increase in the inner diameter of the exhaust-gas route 7.

As exemplified in Fig. 1(A) or Fig. 3(A), the metal cylinder 10 that serves as the heat-radiation portion has its axial direction extended along the axial direction of the exhaust-gas route 7. The metal cylinder 10 has an interior area a portion of which exists on a downstream side of the oxidation catalyst 8 and is made to serve as an oxidation-catalyst downstream chamber 14. An outlet 14a of the oxidation-catalyst downstream chamber 14 has been directed toward the downstream side of the exhaust-gas route 7 as well as a terminal end opening 5b of the flammable-gas lead-out pipe 5. Thus by setting the length of each of the metal cylinder 10 and the oxidation-catalyst downstream chamber 14 to a certain one, even if the flammable gas 4 moves at a high speed within the exhaust-gas route 7 along an axial direction thereof by the pulsation of the exhaust gas, it remains in continuous contact with the outer peripheral surface of the metal cylinder 10 and an inner peripheral surface of the oxidation-catalyst downstream chamber 14, thereby enabling the heat-radiation therefrom to ignite the flammable gas. Therefore, the mis-ignition of the flammable gas 4 hardly occurs attributable to the pulsation of the exhaust gas.

As exemplified in Fig. 2, a control means 19 adjusts an opening degree of an air-metering valve 18 so as to maintain the temperature of the oxidation catalyst 8 within a predetermined range. This makes it possible to secure the activation temperature of the oxidation catalyst 8.

As illustrated for example only in Fig. 2, the control means 19 adjusts the opening degree of the air-metering valve 18 so as to keep the temperature of the oxidation catalyst 8 within the predetermined range, thereby avoiding thermal damage to the oxidation catalyst.

The gas generator 2 gasifies the liquid fuel 3 so that the thus gasified liquid fuel 3 can serve as the flammable gas 4. Therefore, the flammable gas 4 can be easily obtained.

The gas generator 2 partly oxidizes the liquid fuel 3, thereby enabling the flammable gas 4 containing carbon monoxide and hydrogen to be reformed. In consequence, the flammable gas 4 can be ignited even at a relatively low temperature, so that even with the exhaust gas 9 of a low temperature, the flammable gas 4 can be burnt.

As exemplified in Fig. 1A or Fig. 3(A), part of the exhaust gas 9 in the exhaust-gas route 7 passes through an exhaust-gas heating passage 51 and a combustion heat produced with the oxidation catalyst 8 is radiated from the outer peripheral surface of the metal cylinder 10 into the exhaust gas 9 in the exhaust-gas heating passage 15. In consequence, even if the exhaust gas 9 has initially a low temperature, the thermal irradiation of the exhaust gas 9 from the outer peripheral surface of the metal cylinder 10 increases the temperature of the exhaust gas and promotes the combustion of the flammable gas 4 which is mixed with the exhaust gas 9.

As exemplified in Fig. 1(A), part of the exhaust gas 9 in the exhaust-gas route 7 is mixed with part of the flammable gas 4 that has passed through the oxidation catalyst 8. Therefore, even if the exhaust gas has a low temperature, the flammable gas in the exhaust-gas heating passage 51 can be ignited by the heat radiated from the outer peripheral surface of the metal cylinder 10, thereby promoting the combustion of flammable gas mixed in the exhaust gas 9.

As exemplified in Fig. 1(A) or Fig. 3(A), the outer cylinder 50 is formed from metal and is conductively connected thermally to the metal cylinder 10. Further, the combustion heat produced with the oxidation catalyst 8 is also radiated from an inner peripheral surface of the outer cylinder 50 into the exhaust gas 9 in the exhaust-gas heating passage 51. Therefore, even with the exhaust gas 9 of an initially low temperature, the exhaust gas 9 is heated by the thermal radiation from on the inner peripheral surface of the outer cylinder 50, so that the temperature of the exhaust gas 9 increases and the combustion of the flammable gas 4 to be mixed with the exhaust gas 9 is thereby promoted.

As exemplified in Fig. 1(A) or Fig. 3(A), there is provided, between the outlet 12a of the air-supply passage 12 and the oxidation catalyst 8, an air-mixing passage 54 in which at least one and as illustrated more than one throttle orifice 52 is followed by a respective expansion chamber 53 and the flammable gas 4 is mixed with the supplied air 13. Thus the supplied air 13 is uniformly mixed with the flammable gas 4 and therefore a localised high-temperature combustion region is unlikely to occur in the oxidation catalyst 8; accordingly consequential localised thermal damage to the oxidation catalyst 8 can be inhibited.

As illustrated in Fig. 1(A), the metal cylinder 10 is formed from the terminal end portion 5a of the flammable-gas lead-out pipe 5. This dispenses with preparing these parts separately and therefore decreases the number of parts.

As illustrated in Fig. 3(A), the metal cylinder 50 is composed of the terminal end portion 5a of the flammable-gas lead-out pipe 5. This dispenses with preparing these parts separately and therefore can decrease the number of parts.

As exemplified in Fig. 2(A) and Fig. 2(B), on an upstream of the filter 6, a downstream oxidation catalyst 57 is disposed downstream of the metal cylinder 10, from which the flammable gas 4 is released and is burnt with the downstream oxidation catalyst 57. The exhaust gas 9 with its temperature increased by the effect of the oxidation catalyst 8 within the metal cylinder 10 enhances the catalyst activity of the downstream oxidation catalyst 57 and the flammable gas 4 is burnt with the downstream oxidation catalyst 57 to produce combustion heat, which further increase the temperature of the exhaust gas 9. In consequence, even if the exhaust gas 9 has a low temperature, it is possible to surely burn the flammable gas to be mixed in the exhaust gas 9.

### DETAILED DESCRIPTION

There follows a more detailed description of embodiments of the invention with reference to the drawings.

In each of the described embodiments, an explanation is given in relation to an exhaust device for a multi-cylinder vertical diesel engine.

The first embodiment of the present invention is outlined as follows.
This engine, as shown in Fig. 2, comprises a cylinder block 20 onto which a cylinder head 21 is assembled, a head cover 22 being attached to an upper portion of the cylinder head 21 and an oil pan 23 being attached to a lower portion of the cylinder block 20. The cylinder block 20 has a front portion to which a gear case 24 is attached. An engine-cooling fan 25 is arranged at a front portion of the gear case 24, a fly-wheel 26 being disposed at a rear portion of the cylinder block 20. The cylinder head 21 has a lateral side to which an exhaust manifold 27 is attached. An exhaust-gas pipe 29 is connected to the exhaust manifold 27 via an exhaust-gas lead-out pipe 28 and a filter-housing case 30 is connected to the exhaust-gas pipe 29. The filter-housing case 30 houses a diesel-particulate-filter 6, which captures fine particles contained in the exhaust gas 9. This engine is provided with a filter-recovery device 31, which burns the exhaust-gas' fine particles remaining at the filter 6 so as to recover the filter 6.

As shown in Fig. 2(A) and Fig. 2(B), a liquid-fuel supplying source 1 supplies liquid fuel 3 to a gas generator 2, which converts the liquid fuel 3 to flammable gas 4. The gas generator 2 has a flammable-gas lead-out pipe 5 communicating with an exhaust-gas route 7 on an upstream side of the diesel-particulate-filter 6. Oxidation catalysts 8, 57 are arranged in the exhaust-gas route 7 upstream of the filter 6 so as to promote combustion of flammable gas 4, whereby to produce combustion heat that heats the exhaust gas 9. The thus heated exhaust gas 9 can burn the exhaust-gas' fine particles residual at the filter 6. The oxidation catalysts 8, 57 comprise an upstream oxidation catalyst (combustion catalyst) 8 and a downstream oxidation catalyst 57. The upstream oxidation catalyst 8 is arranged within an exhaust-gas pipe 29. The downstream oxidation catalyst 57 is arranged downstream of the filter 6 within a filter-housing case 30. If the oxidation catalyst 8 within the exhaust-gas pipe 29 can increase the temperature of the exhaust gas 9 sufficiently, the downstream oxidation catalyst 57 may be omitted.

As shown in Fig.2 (A), the liquid-fuel supply source 1 is a fuel reservoir of light oil, i.e. fuel of the diesel engine. The gas generator 2 is provided with a mixer 32 and a catalyst chamber 33. Connected to the mixer 32 is a liquid-fuel passage 34 led out of the liquid-fuel supply source 1 and an air-passage 36 led out of an air-supply source 35. The liquid fuel 3 is mixed with the supplied air 13 by the mixer 32 so that it becomes flammable gas 4 in the catalyst chamber 33. The air-supply source 35 is in this embodiment an air blower driven by a motor. the air blower could be driven by the engine. The catalyst chamber 33 accommodates a catalyst. In this embodiment, the gas generator 2 gasifies the liquid fuel 3 to convert the liquid fuel 3 to the flammable gas 4. The catalyst within the catalyst chamber 33 is an oxidation catalyst that partly oxidizes the liquid fuel 3 to produce oxidation heat, which gasifies the rest of the liquid fuel 3. The mixing ratio of the supplied air 13 with the liquid fuel 3, namely O/C of air-fuel ratio, is set to about 0.6, i.e. within a range from 0.4 to 0.8. The catalyst component is selected from a group consisting of platinum series and palladium series.

The liquid fuel 3 may be reformed instead of being gasified. More specifically, the liquid fuel 3 may be reformed to the flammable gas 4 that contains carbon monoxide and hydrogen by partly oxidizing it within the catalyst chamber 33. In this case, a partial oxidation catalyst is used as the catalyst within the catalyst chamber 33 instead of the oxidation catalyst. The mixing ratio of the supplied air 13 with the liquid fuel 3, namely the fuel-air ratio of O/C, is set to about 1.3, i.e. within a range of 1.0 to 1.6. The catalyst component is one of rhodium series.

As shown in Fig. 1(A), the flammable-gas lead-out pipe 5 has a terminal end portion 5a disposed within the exhaust-gas pipe 29 and the terminal end portion 5a of the flammable-gas lead-out pipe 5 is formed into a straight circular metal cylinder 10, in which the oxidation catalyst 8 is disposed. The oxidation catalyst 8 is arranged within the metal cylinder 10. On an upstream side of the oxidation catalyst 8, the air-supply passage 12 is opened to provide an outlet 12a and the flammable gas 4 merges with the supplied air 13. The flammable gas 4 is burnt with the oxidation catalyst 8 to produce catalyst-combustion heat, which is radiated from an outer peripheral surface of the metal cylinder 10 that extends along a gas-mixing passage 15, into the exhaust gas 9 in the exhaust-gas pipe 29. The exhaust gas 9 heated by this heat-radiation is mixed with the flammable gas 4 that has passed through the oxidation catalyst 8.

As shown in Fig. 1(A), the metal cylinder 10, which is the terminal end portion 5a of the flammable-gas lead-out pipe 5, has an axial direction extending along an axial direction of the exhaust pipe 29. The air-supply passage 12 branches from the air lead-out passage 36. The oxidation catalyst 8 is in close contacted with an inner peripheral surface of the metal cylinder 10.

As shown in Fig. 1(A) to Fig. 1(D), within the exhaust-gas pipe 29, an outer cylinder 50 is provided coaxially with the metal cylinder 10 along the outer periphery thereof. An exhaust-gas heating passage 51 is arranged between the metal cylinder 10 and the outer cylinder 50, and part of the exhaust gas 9 in the exhaust-gas pipe 29 passes through the exhaust-gas heating passage 51. The catalyst-combustion heat generated with the oxidation catalyst 8 is radiated from the outer peripheral surface of the metal cylinder 10 into the exhaust gas 9 in the exhaust-gas heating passage 51. The outer cylinder 50 is circular and has its upstream side closed by a partition wall 38, through which the outer cylinder 50 is supported by the metal cylinder 10.
Within the exhaust-gas heating passage 51, part of the exhaust gas 9 in the exhaust-gas pipe 29 is mixed with part of the flammable gas 4 that has passed through the oxidation catalyst 8.

The outer cylinder 50 is formed from metal and is thermo-conductively connected to the metal cylinder 10, so that the catalyst-combustion heat generated with the oxidation catalyst 8 is also radiated from an inner peripheral surface of the outer cylinder 50 into the exhaust gas 9 in the exhaust-gas heating passage 51. In other words, the outer cylinder 50 is thermo-conductively connected to the metal cylinder 10 by the metal partition wall 38.
There is arranged between the outlet 12a of the air-supply passage 12 and the oxidation catalyst 8, an air-mixing passage 54 in which throttle orifices 52 and respective expansion chambers 53 alternate and the flammable gas 4 is mixed with the supplied air 13.
The outer cylinder 50 has a peripheral wall provided with an exhaust-gas introduction port 55 and the metal cylinder 10 has a peripheral wall provided with a flammable-gas introduction port 56. Part of the exhaust gas 9 that passes through the exhaust-gas introduction port 55 to an external side of the outer cylinder 50 is introduced into the exhaust-gas heating passage 51 and part of the flammable gas 4 that has passed through the flammable-gas introduction port 56 to the oxidation catalyst 8 is also introduced into the exhaust-gas heating passage 51.
Further, on an upstream of the filter 6, the downstream oxidation catalyst 57 is arranged downstream of the metal cylinder 10, from which the flammable gas 4 is released and is burnt with the downstream oxidation catalyst 57.

The filter-recovery device heats the exhaust gas as follows.
As shown in Fig. 1(A), on the upstream side of the oxidation catalyst 8, the flammable gas 4 merges with the supplied air 13. Part of the flammable gas 4 performs catalyst-combustion and the remaining part thereof has its temperature enhanced while passing through the oxidation catalyst 8 and flows out to the oxidation-catalyst downstream chamber 14 on the side of a terminal end opening 5b of the flammable-gas lead-out pipe 5. The flammable gas 4 is burnt with the oxidation catalyst 8 to produce catalyst-combustion heat, which is radiated from the outer peripheral surface of the metal cylinder 10 disposed opposite to the exhaust-gas heating passage 51 and an inner peripheral surface of the outer cylinder 50. The exhaust gas 9 is mixed with the flammable gas 4 within the exhaust-gas heating passage 51 and the flammable gas 4 is ignited by the heat radiated from the outer peripheral surface of the metal cylinder 10 and the inner peripheral surface of the outer cylinder 50 and is burnt with oxygen contained in the exhaust gas 9 to increase the temperature of the exhaust gas 9, which is flowed out to the side of the terminal end opening 5b of the flammable-gas lead-out pipe 5.

The high-temperature flammable gas 4 which flows out of the oxidation-catalyst downstream chamber 14 and the high-temperature exhaust gas 9 which flows out of the exhaust-gas heating passage 51 are mixed with the exhaust gas 9 present on the outer side of the outer cylinder 50 and the flammable gas 4 is burnt with the oxygen contained in the exhaust gas 9 to further increase the temperature of the exhaust gas 9. The exhaust gas 9 which has its temperature increased as such enhances the catalytic activity of the downstream oxidation catalyst 57. The flammable gas 4 is burnt with the downstream oxidation catalyst 57 to produce catalyst-combustion heat that still more heats the exhaust gas 9. The exhaust gas 9 with its temperature still more increased as such is supplied to the filter 6, so that the exhaust-gas fine particles clogging the filter 6 is burnt to recover the filter 6.
Moreover, even if the flammable gas 4 moves at a high speed within the exhaust-gas pipe 29 along an axial direction thereof by means of the pulsation of the exhaust gas, it is in continuous contact with the outer peripheral surface of the metal cylinder 10, an inner peripheral surface of the oxidation-catalyst downstream chamber 14 and the inner and outer peripheral surfaces of the outer cylinder 50. Thus the flammable gas 4 can be ignited by the heat-radiation therefrom.

A control means for the filter recovery device is as follows.
As shown in Fig. 2(A), there are provided a rotation-number sensor 41 which senses the number of engine rotations, a load-detecting sensor 42 which senses the engine load, a back-pressure sensor 43 which senses the back pressure of the exhaust gas and an exhaust-gas temperature sensor 44 which senses the exhaust-gas temperature at the inlet of the load-detecting sensor 6. The load-detecting sensor 42 senses a rack position of a fuel-metering rack 45a of a fuel-injection pump 45. A liquid-fuel metering valve 47 is disposed in a liquid-fuel lead-out passage 34 and an air-metering valve 46 is arranged in an air lead-out passage 36. The rotation-number sensor 41, the load-detecting sensor 42, the back-pressure sensor 43 and the exhaust-gas temperature sensor 44 are associated with the liquid-fuel metering valve 47 and the air-metering valve 46 through a control means 19. Based on the number of the engine rotations, the engine load, the back pressure, and the exhaust-gas temperature, the control means 19 presumes how much the filter is clogged so as to judge whether or not it is necessary to recover the filter. On performing the filter-recovery, the control means 19 calculates the necessary production-amount of the flammable gas and adjusts the opening degree of each of the liquid-fuel metering valve 47 and the air-metering valve 46. There is further provided a catalyst-chamber temperature-detecting sensor 48 for sensing the temperature of the catalyst chamber 33, which is connected to the control means 19 so as to limit the increase and decrease of the supplied amount of either the liquid fuel or the air, so that the catalyst-chamber temperature is maintained within the predetermined range. This prevents the catalyst within the catalyst chamber 33 from being damaged by heat and besides retains a high yield of the flammable gas 4. The control means 19 is a micro-computer.

In addition, as shown in Fig. 2(A), a temperature-detecting means 17 for detecting how much the oxidation catalyst 8 is heated and an air-metering valve 18 is arranged in the air-supply passage 12. The air-metering valve 18 is associated with the temperature-detecting means 17 through the control means 19. Based on the temperature detected by the temperature-detecting means 17, the control means 19 adjusts the opening degree of the air-metering valve 18 so as to maintain the temperature of the oxidation catalyst 8 within the predetermined range.
The temperature-detecting means 17 detects how much the oxidation catalyst 8 is heated by detecting the temperature of the flammable gas 4 flowed from the oxidation catalyst 8 to the oxidation-catalyst downstream chamber 14. The temperature-detecting means 17 may detect the temperature of the oxidation catalyst 8.

Fig. 3 shows a second embodiment. This second embodiment differs from the first embodiment on the following points.
The metal cylinder 10 is made of a part separate from the terminal end portion 5a of the flammable-gas lead-out pipe 5 and is supported through the partition wall 38 by the terminal end portion 5a of the flammable-gas lead-out pipe 5. The outer cylinder 50 is composed of the terminal end portion 5a of the flammable-gas lead-out pipe 5. The flammable gas 4 does not flow from the oxidation-catalyst downstream chamber 14 into the exhaust-gas heating passage 51. The metal cylinder 10 has an interior are a portion of which exists on the upstream side of the air-mixing passage 54 and is made to serve as a flammable-gas inlet chamber 11, in which the air-supply passage 12 is opened to provide the outlet 12a.
The remaining construction and functions are the same as those of the first embodiment.

## Claims

1. An exhaust device for a diesel engine comprising a liquid-fuel supply source (1) which supplies liquid fuel (3) to a gas generator (2), the gas generator (2) converting the liquid fuel (3) to flammable gas (4) and having a flammable-gas led-outpipe (5) communicated with an exhaust-gas route (7) upstream of a diesel-particulate-filter (6), an oxidation catalyst (8,57) being arranged in the exhaust-gas route (7) upstream of the filter (6), the flammable gas (4) being burnt with the oxidation catalyst (8,57) to produce combustion heat that heats exhaust gas (9), so that the thus heated exhaust gas (9) burns exhaust-gas fine particles residual at the filter (6), wherein the flammable-gas led-out pipe (5) has a terminal end portion (5a) disposed within the exhaust-gas route (7) and a metal cylinder (10) is arranged at the terminal end portion (5a) of the flammable-gas led-out pipe (5), the oxidation catalyst (8) being disposed within the metal cylinder (10), on an upstream side of the oxidation catalyst (8) an air-supply passage (12) being opened to provide an outlet (12a) and the flammable gas (4) merging with the supplied air (13), the flammable gas (4) being burnt with the oxidation catalyst (8) to produce combustion heat, which is radiated from an outer peripheral surface of the metal cylinder (10) into the exhaust gas (9) in the exhaust-gas route (7), the exhaust gas (9) heated by this heat-radiation being mixed with the flammable gas (4) that has passed through the oxidation catalyst (8),
***characterised in that***
within the exhaust-gas route (7), an outer cylinder (50) is provided coaxially with the metal cylinder (10) along an outer periphery of the metal cylinder (10) and an exhaust-gas heating passage (51) is provided between the metal cylinder (10) and the outer cylinder (50), part of the exhaust gas (9) in the exhaust-gas route (7) passing through the exhaust-gas heating passage (51), the combustion heat generated with the oxidation catalyst (8) being radiated from an outer peripheral surface of the metal cylinder (10) into the exhaust gas (9) in the exhaust-gas heating passage (51).

2. The exhaust device for a diesel engine according to claim 1, wherein
each of the terminal end portion (5a) of the flammable-gas led-out pipe (5) and the metal cylinder (10) has an axial direction extending along an axial direction of the exhaust-gas route (7), the metal cylinder (10) having an interior area a portion of which exists on a downstream side of the oxidation catalyst (8) and is made to serve as an oxidation-catalyst downstream chamber (14), which has an outlet opening (14a) directed toward a downstream side of the exhaust-gas route (7) as well as a terminal end opening (5b) of the flammable-gas led-out pipe (5).

3. The exhaust device for a diesel engine according to claim 1 or 2, wherein
a temperature-detecting means (17) for detecting how much the oxidation catalyst (8) is heated and an air-metering valve (18) is disposed in the air-supply passage (12), the air-metering valve (18) being associated with the temperature-detecting means (17) through a control means (19), the control means (19) adjusting an opening degree of the air-metering valve (18) based on a temperature detected by the temperature-detecting means (17), the oxidation catalyst (8) having a temperature maintained within a predetermined range.

4. The exhaust device for a diesel engine according to any one of claims 1 to 3, wherein
the gas generator (2) partially oxidizes the liquid fuel (3) to reform it to flammable gas (4) which contains carbon monoxide and hydrogen.

5. The exhaust device for a diesel engine according to any one of claims 1 to 4, wherein
within the exhaust-gas heating passage (51), part of the exhaust gas (9) in the exhaust-gas route (7) is mixed with part of the flammable gas (4) that has passed through the oxidation catalyst (8).

6. The exhaust device for a diesel engine according to any one of claims 1 to 5, wherein
the outer cylinder (50) is formed from metal and is thermo-conductively connected to the metal cylinder (10), the combustion heat generated with the oxidation catalyst (8) is also radiated from an inner peripheral surface of the outer cylinder (50) into the exhaust gas (9) in the exhaust-gas heating passage (51).

7. The exhaust device for a diesel engine according to any one of claims 1 to 6, wherein
there is arranged between the outlet (12a) of the air-supply passage (12) and the oxidation catalyst (8), an air-mixing passage (54) in which a throttle orifice (52) and an expansion chamber (53) are alternately arranged and the flammable gas (4) is mixed with the supplied air (13).

8. The exhaust device for a diesel engine according to any one of claims 1 to 7, wherein
the metal cylinder (10) comprises the terminal end portion (5a) of the flammable-gas led-out pipe (5).

9. The exhaust device for a diesel engine according to any one of claims 1 to 6, wherein
the outer cylinder (50) comprises the terminal end portion (5a) of the flammable-gas led-out pipe (5).

10. The exhaust device for a diesel engine according to any one of claims 1 to 9, wherein
on an upstream side of the filter (6), a downstream oxidation catalyst (57) is disposed downstream of the metal cylinder (10), so that the flammable gas (4) released from the metal cylinder (10) is burnt with the downstream oxidation catalyst (57).

## Patentansprüche

1. Abgasvorrichtung für einen Dieselmotor mit einer Flüssigkraftstoff Zufuhrquelle (1), die flüssigen Kraftstoff (3) einem Gasgenerator (2) zuführt, wobei der Gasgenerator (2) den flüssigen Kraftstoff (3) in brennbares Gas (4) umwandelt und ein Ablassrohr (5) für brennbares Gas aufweist, das mit einem Abgasweg (7) stromaufwärts eines Dleselpartikelfilters (6) in Verbindung steht, einem Oxidationskatalysator (8, 57), der im Abgasweg (7) stromaufwärts des Filters (6) angeordnet ist, wobei das brennbare Gas (4) mit dem OxidationsKatalysator (8, 57) verbrannt wird, um Verbrennungswärme zu erzeugen, die das Abgas (9) erhitzt, so dass das so erhitzte Abgas (9) restliche Abgasfeinpartikel am Filter (6) verbrennt, wobei das Ablassrohr (5) für brennbares Gas einen Abschlussendteil (5a) aufweist, der innerhalb des Abgasweges (7) angeordnet ist, und ein Metallzylinder (10) am Abschlussendteil (5a) des Ablassrohrs (5) für brennbares Gas angeordnet ist, wobei der Oxidationskatalysator (8) innerhalb des Metallzylinders (10) angeordnet ist, wobei auf einer Stromaufwärtsseite des Oxidationskatalysators (8) ein Luftzufuhrdurchgang (12) geöffnet ist, um einen Auslass (12a) bereitzustellen, und das brennbare Gas (4) sich mit der zugeführten Luft (13) vermischt, wobei das brennbare Gas (4) mit dem Oxidationskatalysator (8) verbrannt wird, um Verbrennungswärme zu erzeugen, die von einer äußeren Umfangsfläche des Metallzylinders (10) in das Abgas (9) im Abgasweg (7) abgestrahlt wird, wobei das Abgas (9), das durch diese Wärmestrahlung erhitzt wird, mit dem brennbaren Gas (4) vermischt wird, das durch den Oxidationskatalysator (8) geströmt ist,
**dadurch gekennzeichnet, dass**
innerhalb des Abgasweges (7) ein äußerer Zylinder (50) koaxial zu dem Metallzylinder (10) entlang eines äußeren Umfangs des Metallzylinders (10) vorgesehen ist und ein Abgasheizdurchgang (51) zwischen dem Metallzylinder (10) und dem äußeren Zylinder (50) vorgesehen ist, wobei ein Teil des Abgases (9) in dem Abgasweg (7) durch den Abgasheizdurchgang (51) strömt, wobei die mit dem Oxidationskatalysator (8) erzeugte Verbrennungswärme von einer äußeren Umfangsfläche des Metalizylinders (10) in das Abgas (9) im Abgasheizdurchgang (51) abgestrahlt wird.

2. Abgasvorrichtung für einen Dieselmotor nach Anspruch 1, wobei
jeweils der Abschlussendteil (5a) des Ablassrohrs (5) für brennbares Gas und der Metallzylinder (10) eine axiale Richtung aufweist, die sich entlang einer axialen Richtung des Abgasweges (7) erstreckt, wobei der Metallzylinder (10) einen inneren Bereich aufweist, von dem ein Teil auf einer Stromabwärtsseite des Oxidationskatalysators (8) liegt und als Oxidationskatalysator-stromabwärtskammer (14) dient, die eine Auslassöffnung (14a), die in Richtung einer Stromabwärtsseite des Abgasweges (7) gerichtet ist, sowie eine Abschlussendöffnung (5b) des Ablassrohrs (5) für brennbares Gas aufweist.

3. Abgasvorrichtung für einen Dieselmotor nach Anspruch 1 oder 2, wobei
ein Temperaturerfassungsmittel (17) zum Erfassen, wie stark der Oxidationskatalysator (8) erhitzt ist, und ein Luftdosierventil (18) im Luftzufuhrdurchgang (12) angeordnet sind, wobei das Luftdosierventil (18) mit dem Temperaturerfassungsmittel (17) durch ein Steuermittel (19) verbunden ist, wobei das Steuermittel (19) einen Öffnungsgrad des Luftdosierventils (18) auf der Basis einer durch das Temperaturerfassungsmittel (17) erfassten Temperatur einstellt, wobei der Oxidationskatalysator (8) eine Temperatur aufweist, die innerhalb eines vorbestimmten Bereichs gehalten wird.

4. Abgasvorrichtung für einen Dieselmotor nach einem der Ansprüche 1 bis 3, wobei
der Gasgenerator (2) den flüssigen Kraftstoff (3) teilweise oxidiert, um ihn in brennbares Gas (4) umzuformen, das Kohlenmonoxid und Wasserstoff enthält.

5. Abgasvorrichtung für einen Dieselmotor nach einem der Ansprüche 1 bis 4, wobei
innerhalb des Abgasheizdurchgangs (51) ein Teil des Abgases (9) im Abgasweg (7) mit einem Teil des brennbaren Gases (4) vermischt wird, das durch den Oxidationskatalysator (8) geströmt ist.

6. Abgasvorrichtung für einen Dieselmotor nach einem der Ansprüche 1 bis 5, wobei
der äußere Zylinder (50) aus Metall ausgebildet ist und wärmeleitfähig mit dem Metallzylinder (10) verbunden ist, wobei die mit dem Oxidationskatalysator (8) erzeugte Verbrennungswärme auch von einer inneren Umfangsfläche des äußeren Zylinders (50) in das Abgas (9) im Abgasheizdurchgang (51) abgestrahlt wird.

7. Abgasvorrichtung für einen Dieselmotor nach einem der Ansprüche 1 bis 6, wobei
zwischen dem Auslass (12a) des Luftzufuhrdurchgangs (12) und dem Oxidationskatalysator (8) ein Luftmischdurchgang (54) angeordnet ist, in dem eine Drosselklappe (52) und eine Expansionskammer (53) abwechselnd angeordnet sind, und das brennbare Gas (4) mit der zugeführten Luft (13) vermischt wird.

8. Abgasvorrichtung für einen Dieselmotor nach einem der Ansprüche 1 bis 7, wobei
der Metallzylinder (10) den Abschlussendteil (5a) des Ablassrohrs (5) für brennbares Gas aufweist.

9. Abgasvorrichtung für einen Dieselmotor nach einem der Ansprüche 1 bis 6, wobei
der äußere Zylinder (50) den Abschlussendteil (5a) des Ablassrohrs (5) für brennbares Gas aufweist.

10. Abgasvorrichtung für einen Dieselmotor nach einem der Ansprüche 1 bis 9, wobei
auf einer Stromaufwärtsseite des Filters (6) ein Stromabwärtsoxidationskatalysator (57) stromabwärts des Metallzylinders (10) angeordnet ist, so dass das brennbare Gas (4), das aus dem Metallzylinder (10) abgegeben wird, mit dem Stromabwärtsoxidationskatalysator (57) verbrannt wird.

## Revendications

1. Dispositif d'échappement destiné à un moteur diesel comprenant une source d'alimentation en carburant liquide (1) qui fournit le carburant liquide (3) à un générateur de gaz (2), le générateur de gaz (2) convertissant le carburant liquide (3) en gaz inflammables (4) et présentant une canalisation de sortie des gaz inflammables (5) en communication avec un chemin des gaz d'échappement (7) en amont d'un filtre à particules diesel (6), un catalyseur d'oxydation (8, 57) étant agencé dans le chemin des gaz d'échappement (7) en amont du filtre (6), les gaz inflammables (4) étant brûlés avec le catalyseur d'oxydation (8, 57) de façon à produire une chaleur de combustion qui chauffe les gaz d'échappement (9), de telle sorte que les gaz d'échappement (9) ainsi chauffés brûlent les particules fines résiduelles des gaz d'échappement au niveau du filtre (6), dans lequel la canalisation de sortie des gaz inflammables (5) présente une partie d'extrémité terminale (5a) disposée à l'intérieur du chemin des gaz d'échappement (7) et un cylindre métallique (10) est agencé au niveau de la partie d'extrémité terminale (5a) de la canalisation de sortie des gaz inflammables (5), le catalyseur d'oxydation (8) étant disposé à l'intérieur du cylindre métallique (10), du côté en amont du catalyseur d'oxydation (8), un passage d'alimentation en air (12) étant ouvert de façon à fournir une sortie (12a) et les gaz inflammables (4) fusionnant avec l'air fourni (13), les gaz inflammables (4) étant brûlés avec le catalyseur d'oxydation (8) de façon à produire une chaleur de combustion, qui est rayonnée à partir d'une surface périphérique extérieure du cylindre métallique (10) dans les gaz d'échappement (9) dans le chemin des gaz d'échappement (7), les gaz d'échappement (9) chauffés par ce rayonnement thermiques étant mélangés aux gaz inflammables (4) qui sont passés à travers le catalyseur d'oxydation (8) ;
**caractérisé en ce que** :
à l'intérieur du chemin des gaz d'échappement (7), un cylindre extérieur (50) est disposé de manière coaxiale avec le cylindre métallique (10) le long d'une périphérie extérieure du cylindre métallique (10) et un passage de chauffage des gaz d'échappement (51) est disposé entre le cylindre métallique (10) et le cylindre extérieur (50), une partie des gaz d'échappement (9) dans le chemin des gaz d'échappement (7) passant à travers le passage de chauffage des gaz d'échappement (51), la chaleur de combustion générée avec le catalyseur d'oxydation (8) étant rayonnée à partir d'une surface périphérique extérieure du cylindre métallique (10) dans les gaz d'échappement (9) dans le passage de chauffage des gaz d'échappement (51).

2. Dispositif d'échappement destiné à un moteur diesel selon la revendication 1, dans lequel :
chacun de la partie périphérique terminale (5a) de la canalisation de sortie des gaz inflammables (5) et du cylindre métallique (10) présente une direction axiale qui s'étend le long de la direction axiale du chemin des gaz d'échappement (7), le cylindre métallique (10) présentant une zone intérieure dont une partie existe du côté aval du catalyseur d'oxydation (8) et destinée à servir de chambre aval de catalyseur d'oxydation (14), qui présente une ouverture de sortie (14a) dirigée vers le côté aval du chemin des gaz d'échappement (7) ainsi qu'une ouverture d'extrémité terminale (5b) de la canalisation de sortie des gaz inflammables (5).

3. Dispositif d'échappement destiné à un moteur diesel selon la revendication 1 ou la revendication 2, dans lequel :
des moyens de détection de la température (17) destinés à détecter la quantité de chaleur fournie au catalyseur d'oxydation (8) et une soupape de dosage de l'air (18) est disposée dans le passage d'alimentation en air (12), la soupape de dosage de l'air (18) étant associée aux moyens de détection de la température (17) par l'intermédiaire de moyens de commande (19), les moyens de commande (19) réglant le degré d'ouverture de la soupape de dosage de l'air (18) sur la base d'une température détectée par les moyens de détection de la température (17), le catalyseur d'oxydation (8) présentant une température maintenue à l'intérieur d'une plage prédéterminée.

4. Dispositif d'échappement destiné à un moteur diesel selon l'une quelconque des revendications 1 à 3, dans lequel :
le générateur de gaz (2) oxyde en partie le carburant liquide (3) de façon à le transformer en gaz inflammables (4) qui contiennent du monoxyde de carbone et de l'hydrogène.

5. Dispositif d'échappement destiné à un moteur diesel selon l'une quelconque des revendications 1 à 4, dans lequel :
à l'intérieur du passage de chauffage des gaz d'échappement (51), une partie des gaz d'échappement (9) dans le chemin des gaz d'échappement (7) est mélangée à une partie des gaz inflammables (4) qui sont passés à travers le catalyseur d'oxydation (8).

6. Dispositif d'échappement destiné à un moteur diesel selon l'une quelconque des revendications 1 à 5, dans lequel :
le cylindre extérieur (50) est réalisé en métal et il est connecté de manière thermoconductrice au cylindre métallique (10), la chaleur de combustion générée avec le catalyseur d'oxydation (8) est également rayonnée à partir d'une surface périphérique intérieure du cylindre extérieur (50) dans les gaz d'échappement (9) dans le passage de chauffage des gaz d'échappement (51).

7. Dispositif d'échappement destiné à un moteur diesel selon l'une quelconque des revendications 1 à 6, dans lequel :
un passage de mélange d'air (54) dans lequel un orifice de dispositif d'étranglement (52) et une chambre de détente (53) sont agencés de manière alternée, est agencé entre la sortie (12a) du passage d'alimentation en air (12) et le catalyseur d'oxydation (8), et les gaz inflammables (4) sont mélangés à l'air fourni (13).

8. Dispositif d'échappement destiné à un moteur diesel selon l'une quelconque des revendications 1 à 7, dans lequel :
le cylindre métallique (10) comprend la partie périphérique terminale (5a) de la canalisation de sortie des gaz inflammables (5).

9. Dispositif d'échappement destiné à un moteur diesel selon l'une quelconque des revendications 1 à 6, dans lequel :
le cylindre extérieur (50) comprend la partie périphérique terminale (5a) de la canalisation de sortie des gaz inflammables (5).

10. Dispositif d'échappement destiné à un moteur diesel selon l'une quelconque des revendications 1 à 9, dans lequel :
du côté amont du filtre (6), un catalyseur d'oxydation aval (57) est disposé en aval du cylindre métallique (10), de telle sorte que les gaz inflammables (4) libérés à partir du cylindre métallique (10) soient brûlés avec le catalyseur d'oxydation aval (57).
